# EUROPEAN PATENT APPLICATION

(11) **EP 1 796 368 A1**
(43) Date of publication of application: **13.06.2007**
(21) Application number: 05111754.7
(22) Date of filing: 06.12.2005
(51) Int. Cl.: H04N 1/32

(54) **Scan apparatus**

(71) Applicant: Océ-Technologies B.V., 5914 CC Venlo (NL)
(72) Inventor: Spijkerbosch, Johannes E., 4300 BH Tiel (NL); Helder, Matthieu W.J., 5986 AT Beringe (NL); Peeters, Bas H., 5953 PZ Reuver (NL)
(74) Representative: van Meeteren, Arend Anthonie

(57) **Abstract**

A scan apparatus for creating an electronic document from a hard copy original (16), characterised by an authentication system (24, 26) including at least one input device (22; 28, 30, 32, 34) permitting a user, who scans an original, to input a protected authentication token, e. g. a fingerprint, and a processing system (26) and software for determining a unique user ID on the basis of the authentication token and for adding user information to the scanned document.

## Description

The invention relates to a scan apparatus for creating an electronic document from a hard copy original.

Online processing of electronic documents is increasingly being recognised as a way to increase the efficiency of administrative and business transactions, taking advantage of the benefits of electronic data transmission systems or networks, such as the Internet, and electronic data processing and storage devices for the distribution, management and archiving of documents.

Several techniques have been developed for increasing the authenticity and non-repudiation properties of electronic documents to a level comparable to or even superior to that of conventional hard copy documents with a hand-written signature. For example, techniques and infrastructure have been developed for adding a digital signature to an electronic document and for verifying the authenticity of the digital signature. These techniques are frequently combined with encryption techniques for improving the confidentiality and integrity of electronic documents.

Yet, the conventional processing of hard copy documents still plays an important role, and hybrid workflows involving a combination of both, electronic documents and hard copies are frequently found in practice. Such workflows typically involve steps of printing hard copies from electronic documents and, conversely, scanning hard copy originals in order to convert them into electronic documents.

It is an object of the invention to provide a scanner which has user-friendly facilities for proving the authenticity of electronic documents that are scanned from hard copy originals.

According to the invention, this object is achieved by a scan apparatus having an authentication system including at least one input device permitting a user, who scans an original, to input a protected authentication token, and a processing system and software for determining a unique user ID on the basis of the authentication token and for adding user information to the scanned document.

In this context, "authentication" is meant to be "providing a trustworthy identification".

It has been found that the scanning step implies a gap in the authenticity and integrity chain of a document. For example, when a hard copy is printed from an electronic document that bears a digital signature, and the hard copy is then scanned to create a new electronic document, a symbolic representation of the original digital signature may still be visible on the scanned document, but the essential security features of the original digital signature will be lost.

In a certain sense, the user who scans the hard copy may be considered as the author of a new electronic document, and, in order to close the authenticity gap, it may be required or at least desirable that the user who has scanned the hard copy is reliably identified on the new electronic document.

Even when the hard copy that is being scanned bears a hand-written signature of the original author, there is still an integrity gap, e.g., it cannot be excluded that the contents of the hard copy have been manipulated or tampered prior to scanning. Traces of such manipulations will in general be visible on the hard copy itself, but not on the electronic document that has been scanned therefrom. This is an other reason why not only the original author but also the person scanning should be authenticated on the new electronic document.

In order to fulfil this requirement, it would heretofore have been necessary that the user sends the document that he has scanned to his personal computer and adds his own digital signature, before the document is delivered or processed further.

The present invention provides a way to achieve the same result in a more convenient way. According to the invention, it is sufficient for the user, who scans the hard copy, to authenticate himself in a safe way right at the scan apparatus, and the user information permitting to authenticate the person who has scanned the document will automatically be added to the electronic copy, so that this electronic copy can directly be processed further or sent to its destination without any further intervention of the user.

There are several possibilities for a user to authenticate himself at the scan apparatus. Some examples are listed below in the sequence of increasing security:
- the user has a personal storage device such as a USB key, a RFID device, a chip card, a magnetic card or the like, which stores data that uniquely authenticate the specific user, and these data are read by the scan apparatus,
- the user types-in his name or another personal ID together with a secret PIN code, and these data are checked for consistency by the software of the scan apparatus, and
- the scan apparatus is adapted to detect and recognise biometric data, e.g. a fingerprint, of the user.

At least one of these possibilities or a suitable combination thereof should be implemented on the scan apparatus according to the invention. It is a common feature of all these possibilities that the user inputs an authentication token, e.g. data from a USB key, a PIN code or biometric data, and this token is protected in the sense that the authentication system of the scan apparatus can reliably identify the user on the basis of this token. For example, the data of an electronic key are protected because there is only one user who processes a key with these data. Of course, there is a certain risk that the key may be stolen or may be used by a person who is not authorised to do so. A PIN code is protected as long as the user keeps this code secret. Biometric data are inherently user-specific and are difficult to fake, so that they provide the highest level of security.

The authentication system of the scan apparatus includes a data base or has access to a remote data base linking the protected token of each user to a unique user ID, so that the user can be identified and the corresponding information on the user can be added to the electronic document, e.g. in the form of a digital signature.

Further developments of the invention are indicated in the dependent claims.

Preferably, the authentication system is adapted to add to the electronic document a machine certificate that identifies the scan apparatus and confirms that the identity of the user has been checked by the scan apparatus, so that the person indicated in the user information of the document is actually the person who has scanned the document.

In order to improve the integrity and confidentiality of the scanned document, the authentication system may be adapted to encrypt the document and then to add the digital signature. Conveniently, public key cryptography will be used, and the digital signature as well as the certificate confirming the identity of the user may be based on a public key infrastructure and hosted by a trusted certification agency, so that a recipient of the electronic document will be able to validate the digital signature and/or the machine certificate. The user may also have the option to specify that a personal certificate is added to the document in addition to the machine certificate.

In order to provide an even higher level in security in confirming the identity of the user, the biometric data may be stored in the authentication system in encrypted form, and a key necessary for decrypting these data may be stored on a personal electronic device, e.g. a USB key, of the user. Then, in order to authenticate himself, the user has to subject himself to biometric data recognition, e.g. by having his fingerprint scanned, and he then has to plug in his USB key, so that the stored biometric data may be decrypted and may then be compared to the data that have currently been scanned in, in order to determine the identity of the user. This has the advantage that a person trying to attack the authentication system cannot test-out the reaction of the fingerprint recognition system, unless he is in possession of a USB key. Even if the attacker has managed to fake the biometric data of a registered user, this will not help him, unless he also possesses the USB key of this very user. This concept may be beneficial not only within the framework of the invention as claimed in claim 1, but in conjunction with safe biometric data recognition systems in general.

Preferred embodiments of the invention will now be described in detail in conjunction with the drawings, wherein:
- Fig. 1: is a view of essential parts of a scan apparatus;
- Fig. 2: is a flow diagram of a process for creating a scanned electronic document with digital signature according to a first embodiment; and
- Fig. 3: is a flow diagram of a process according to a second embodiment.

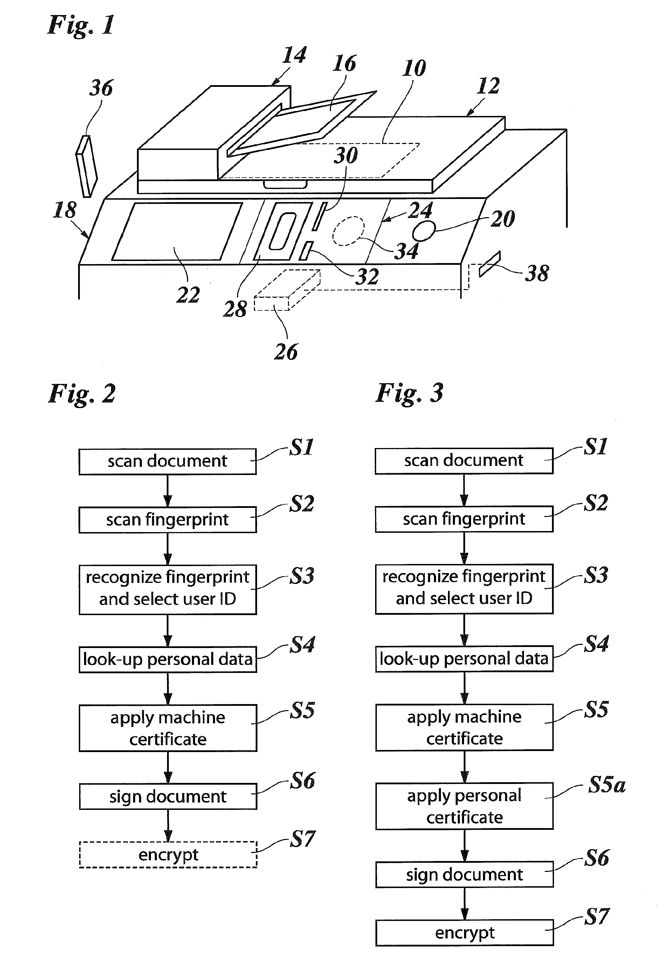

The scan apparatus shown in Fig. 1 has a document stage 10 onto which a document to be scanned may be placed manually after a cover 12 has been lifted. A document feeder 14 is mounted on the cover 12 and permits to convey sheets 16 of a multi-page document one by one over the document stage 10, so that they may be scanned. As is conventional in the art, an operating panel 18 of the scan apparatus comprises a start button 20 and a touch screen 22. The touch screen 22 may be used for displaying information and for inputting data and instructions by means of soft keys.

In the shown embodiment, the operating panel 18 further comprises an input section 24 which, together with an electronic data processing system 26 forms an authentication system permitting a user to authenticate himself to the machine. The input section 24 comprises one or a number of input devices permitting the user to input a user specific token which will be checked against a data base in the processing system 26 so as to find out the identity of the user. In the example shown, the input devices comprise a fingerprint scanner 28, a card reader 30, a USB socket 32 and a RFID transceiver 34.

In order to authenticate himself by means of his fingerprint, the user puts his finger onto the fingerprint scanner 28, so that the fingerprint may be scanned, and the scanned data are compared to fingerprint schemes of registered users that are stored in the data base together with an ID that uniquely authenticates each registered user. When the scanned fingerprint matches with one of the stored fingerprint schemes, the user is authenticated by the corresponding ID.

As an alternative, the user may insert a personal chip card or magnetic card into the card reader 30. The authentication data of the user are read from the card and are compared to the data in the data base.

According to another alternative, the authentication data of the user may be stored on a personal electronic key, e.g. a USB key 36 of the user. Then, the user will plug the USB key 36 into the USB socket 32, so that the authentication data may be read.

According to yet another alternative, the user may carry a RFID transponder in this pocket, for example, and when the user approaches the scan apparatus, the authentication data will automatically be read from the transponder by means of the RFID transceiver 34.

Finally, the user may type-in his authentication data on the touch screen 22 together with a secret PIN code. In this case, the data base contains the authentication data, the PIN codes and the IDs of each registered user, when both the authentication data and the PIN code that have been input by the user match with the stored data of a registered user, this user is authenticated by his ID.

If the card reader 30, the USB plug 32 or the RFID transceiver 34 are used, the user may additionally be required to key-in his PIN code, which will then also be checked against the data base in order to enhance the security of the authentication process.

The various input devices that have been described above should only be understood as examples, it being obvious to the skilled person that still other devices and/or methods may be used. Further, in general, it is sufficient that at least one of these input devices is installed on the scan apparatus. If the authentication section 24 of the scan apparatus includes two or more active input devices, then the method that has been used for authenticating the user is preferably indicated in the user information that is added to the document.

When the user has authenticated himself in one or the other way and has scanned-in a document, the processing system 26 uses the ID of the user for automatically adding user information to the electronic copy of the document that has been scanned by that user. In particular, this user information will permit to identify the person who has scanned the document. For example, the added user information may have the form of a digital signature. The data that are needed for creating the digital signature or other user information may be looked-up on the basis of the ID of the identified user from any suitable source, utilising for example the LDAP protocol.

The above implies that the document contents should not be altered in a later stage. If it were possible that the contents change, the signature would be useless. Therefore the processing system 26 employs an algorithm that prevents changing the document contents. This algorithm incorporates a digest of the document contents into the signature. This digest is a value that uniquely represents the document contents. If changes would be made to the contents and another digest were computed, it would not be the same as the original digest. This allows for ensuring that the signature is still valid. The PDF digital document format has standard mechanisms for this.

Preferably, the added user information includes also a machine certificate which confirms that the user, who has signed the electronic document with his digital signature, has actually been identified as the person who has scanned-in the document. The machine certificate is installed in the processing system 26. This system includes software facilities permitting an authorised administrator, to create and administer the machine certificates. In order to get access to this software, the administrator may authenticate himself, for example by means of a specific USB key 36, or he may be registered as administrator in the data base, so that he will automatically get access as soon as he has authenticated himself. The administrator may also have the power to install third-party certificates that are provided by a trusted external authority and may be used to validate the machine certificate.

The processing system 26 is connected to a network interface 38, so that an LDAP look-up for retrieving the personal data of an identified user may also be made in a remote data base or a network. Likewise, even the data base linking the stored fingerprint schemes or other authentication data to the user IDs, and the software for creating and applying the machine certificates may be installed in a remote device which may then be shared among a plurality of scan apparatus. This will make it easier for an administrator to administer a plurality of scan apparatus.

It will be understood that the term "scan apparatus", as used here, encompasses any kind of apparatus that has a scan function, including digital copiers and multifunctional devices for printing, scanning and copying.

An example of a process for creating a scanned document with digital signature of the person scanning is illustrated in Fig. 2. It shall be assumed here that the fingerprint scanner 28 is used for authenticating the user.

In step S1, the hard copy original is scanned as in a conventional scan apparatus. Then, the user has the option to add a digital signature. To this end, the user is queried via the touch screen 22 whether he wants to add a digital signature, and if he does, he places his finger tip onto the fingerprint scanner 28, and the fingerprint will be scanned in step S2. The option to add a digital signature will only stay available for a limited, comparatively short time interval after the document has been scanned-in, and, at any rate, it will be cancelled as soon as the start button 20 is pressed again (by the same user or another user) in order to scan a new document. Thus, it is assured that only the person who has actually scanned the document can add his digital signature.

In a modified embodiment, the order of the steps S1 and S2 may be reversed. Then, the digital signature will be added only to the first single-page or multi-page document that is scanned after the fingerprint scan.

In step S3, the processing system 26 checks the scanned print fingerprint against the stored fingerprint schemes in the data base, and when a match is found, the ID of the pertinent user is retrieved from the data base. If no match if found, the user is notified on the touch screen 22 that the authentication has failed.

If the authentication was successful, the personal data of the user are looked up in step S4, and the machine certificate is applied in step S5. Then, in step S6, the document is signed by adding the digital signature (user information), including the machine certificate, to the data string representing the scanned document.

In an optional step S7, the user is asked whether he wants to encrypt the document. If he does, the document data are encrypted with a key, that is specified by the user. When public key cryptography is used, the key will be the public key of the addressee for whom the document is intended.

Figure 3 illustrates a modified process, in which the steps S1 - S5 are identical with the steps S1, S5 that have been described above. In an optional step S5a, the user may choose to add a personal certificate in addition to the machine certificate applied in step S5. The personal certificate may be created by the user himself, when he registers as a user of the scan apparatus, and may include his private key, so that other parties receiving the scanned document will obtain a validated key permitting them to send confidential messages to the user. Then, when the document is signed and encrypted in steps S6 and S7, the digital signature may be derived either from a "private" key of the scan apparatus (machine signature) or from the personal private key of the user (personal signature). In any case, it is the machine certificate applied in step S5 that guaranties that the person who is identified on the document, be it by his personal signature or by machine-generated user information, is actually the person who has scanned the document. This certificate is preferably encrypted and cannot be read by individuals at the scan apparatus.

In a more elaborated embodiment, which provides an even higher level of security, the authentication of the user is based on a combination of fingerprint scan and USB key. Then, in step S2, the user is invited to plug in his USB key, before his fingerprint can be recognised. The fingerprint schemes of the registered users are stored in the data base in encrypted form, each with a user-specific key. A key that is needed for decryption is stored on the USB key of the pertinent user. Thus, the processing system 26 reads the decryption key from the USB key 36 and decrypts the stored fingerprint schemes and compares them to the fingerprint that has been scanned-in. Of course, this decryption and recognition will only be successful if the user has both the correct fingerprint and the correct key.

## Claims

1. A scan apparatus for creating an electronic document from a hard copy original (16), **characterised by** an authentication system (24, 26) including at least one input device (22; 28, 30, 32, 34) permitting a user, who scans an original, to input a protected authentication token, and a processing system (26) and software for determining a unique user ID on the basis of the authentication token and for adding user information to the scanned document.

2. The scan apparatus according to claim 1, comprising an input device (28) that is adapted to detect biometric data of the user.

3. The scan apparatus according to claim 2, wherein the input device is a fingerprint scanner (28).

4. The scan apparatus according to any of the preceding claims, including an input device (30, 32, 34) adapted to read an authentication token from a personal electronic key device (36) of the user.

5. The scan apparatus according to claims 2 and 4, wherein the processing system (26) includes or has access to a data base storing the IDs and the biometric data of a plurality of users, the stored biometric data are encrypted with user-specific keys, and the key for decrypting the biometric data is stored on the personal electronic key device (36) of the pertinent user.

6. The scan apparatus according to any of the preceding claims, comprising an input device (22) adapted to input a PIN code.

7. The scan apparatus according to any of the preceding claims, wherein the software of the authentication system is adapted to add a digital signature to the scanned document.

8. The scan apparatus according to any of the preceding claims, wherein the software of the authentication system is adapted to add to the scanned document a machine certificate confirming that the user, who is indicated by the user information in the document, has been identified as the person who has scanned the document.

9. The scan apparatus according to any of the preceding claims, wherein the software of the authentication system is adapted to encrypt the electronic document.

10. The scan apparatus according to any of the preceding claims, wherein the software of the authentication system is adapted to add to the scanned document, as part of the user information, a personal public key certificate of the user.

11. A digital copier device including the scan apparatus of any one of the preceding claims.
